# EUROPÄISCHE PATENTSCHRIFT

(11) **EP 0 789 620 B1**
(45) Veröffentlichungstag und Bekanntmachung des Hinweises auf die Patenterteilung: **07.06.2000**
(21) Anmeldenummer: 95937014.9
(22) Anmeldetag: 26.10.1995
(51) Int. Cl.: B01J 20/32, G01N 30/48

(54) **TRENNMATERIALIEN UND VERFAHREN ZU IHRER HERSTELLUNG**
SEPARATING MATERIALS AND PROCESS FOR THEIR PREPARATION
MATERIAUX DE SEPARATION ET LEUR PROCEDE DE FABRICATION

(30) Priorität: 04.11.1994 DE 4439444
(43) Veröffentlichungstag der Anmeldung: 20.08.1997
(73) Patentinhaber: MERCK PATENT GmbH, 64293 Darmstadt (DE)
(72) Erfinder: MÜLLER, Egbert, D-64390 Erzhausen (DE); MACK, Margot, D-64689 Grasellenbach (DE); BRITSCH, Lothar, D-79276 Reute (DE)
(86) Internationale Anmeldenummer: EP9504217
(87) Internationale Veröffentlichungsnummer: WO9614151

(56) Entgegenhaltungen:
- EP-A- 0 259 037
- US-A- 4 547 463
- US-A- 4 617 321
- US-A- 5 021 160

## Beschreibung

Die Erfindung betrifft Trennmaterialien auf Basis von hydroxylgruppenhaltigen Trägern, deren Oberflächen mit kovalent gebundenen Polymeren beschichtet sind sowie Verfahren zu ihrer Herstellung.

Die erfindungsgemäßen Trennmaterialien können zur Trennung von Makromolekülen, insbesondere zur Fraktionierung von Biopolymeren, eingesetzt werden. Die Auftrennung und Reinigung biologischer Makromoleküle, wie Nucleinsäuren, Proteine, Enzyme, subzelluläre Einheiten, Peptide, monoklonale Antikörper oder ganze Zellen, hat im Hinblick auf die Gentechnologie und Biotechnologie große Bedeutung erlangt.

Bekannt ist z.B. der Einsatz von lonenaustauschern zur Fraktionierung von biologischen Makromolekülen. Die herkömmlichen Materialien bestehen aus Polymeren wie Polymethacrylate, Polystyrole, Agarose, vernetztes Dextran oder Kieselgelen, die entsprechende funktionelle Gruppen tragen.

Aus der EP 337 144 sind Trennmaterialien auf Basis von hydroxylgruppenhaltigen Trägern, deren Oberflächen mit kovalent gebundenen Polymeren beschichtet sind, bekannt, wobei die Polymeren gleiche oder verschiedene wiederkehrende Einheiten darstellen, die durch Pfropfpolymerisation in Gegenwart von Cer(IV)-Ionen an den Träger gebunden werden.

Aus US 4,547,463 sind wasserunlösliche Copolymere bekannt, die strukturelle Einheiten von Sulfoethylacrylamid und Derivate davon enthalten. Diese Copolymere werden zur Adsorption und Vermehrung von Mikroorganismen an den Copolymerpartikeln verwendet, nicht jedoch zur Trennung und Fraktionierung von z.B. Makromolekülen.

Diese Trennmaterialien sind nicht in ihrer Gesamtheit optimal und weisen insbesondere im Hinblick auf das Herstellungsverfahren und die Pfropfungsausbeute noch erhebliche Nachteile auf.

Der Erfindung liegt die Aufgabe zugrunde, ein optimales Trennmaterial zur Verfügung zu stellen, das die erwähnten Nachteile nicht hat.

Gegenstand der Erfindung sind Trennmaterialien auf Basis von hydroxylgruppenhaltigen Trägern, deren Oberflächen mit kovalent gebundenen Polymeren beschichtet sind, die dadurch gekennzeichnet sind, daß die Polymeren aus gleichen wiederkehrenden Einheiten der Formel I bestehen 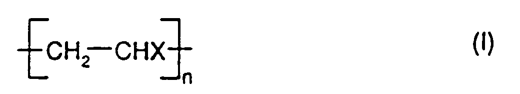 worin
- X: CO-NH-CH₂-CH₂-SO₃H und
- n: 2-100, vorzugsweise 15-50,
bedeuten, hergestellt durch
Pfropfpolymerisation in Gegenwart von Cer(IV)-Ionen und von 1 bis 3,5 Mol/l anorganischer Salze im Polyacrylierungsansatz durchführt.

Dabei ist es besonders vorteilhaft, wenn die für die Polymerisation erforderlichen Monomere durch Umsetzung von Acrylat mit Aminoethansulfonsäure in wäßriger Lösung in Gegenwart eines Stabilisators herstellt und direkt zur Pfropfpolymerisation eingesetzt werden.

Überraschenderweise hat sich gezeigt, daß die erfindungsgemäßen Trägermaterialien für schnelle chromatographische Trennungen besonders geeignet sind. Die Trennmaterialien sind universell einsetzbar für die lonenaustauschchromatographie von Makromolekülen, insbesondere von Biopolymeren.

Die erfindungsgemäßen Trennmaterialien bestehen aus Trägerteilchen mit Hydroxylgruppen, auf die über die α-C-Atome der Hydroxylgruppen ein polymeres Material, ausgehend von dem Monomeren Sulfoethylacrylamid aufgepfropft ist.

Als Trägerteilchen kommen alle allgemein bekannten porösen und unporösen Chromatographieträger, die primäre oder sekundäre, aliphatische Hydroxylfunktionen an der Oberfläche aufweisen, in Frage.

Bevorzugt sind dabei beispielsweise hydrophile Polymere auf Acrylat- und Methacrylatbasis, Polymere auf Polyvinylalkohol-Basis, diolsubstituierte Kieselgele, Polysaccharide auf Agarose-Basis, Cellulose, Cellulosederivate oder Polymere auf Dextran-Basis. Es können aber selbstverständlich auch andere Polymere oder Copolymere auf der Grundlage von Monomeren wie Vinylverbindungen, Acrylamid, (Meth)Acrylsäureestern oder (Meth)Acrylnitril in hydroxylierter Form eingesetzt werden.

Die Durchführung von schnellen chromatographischen Trennungen im sogenannten Down stream processing hat in letzter Zeit zunehmende Bedeutung bekommen. Zwei wichtige Aspekte sprechen z.B. bei der Proteinreinigung für die Durchführung einer schnellen Trennung: Ein zu langer Kontakt des zu reinigenden Proteins mit dem Trägermaterial führt zu einem Abfall der biologischen Aktivität und die bei einem Zellaufschluß freigesetzten Proteasen zerstören bei einer langen Elutionsdauer die Proteine.

Eine wesentliche Voraussetzung für die Durchführung einer schnellen Trennung ist jedoch, daß die Proteinbindungskapazität unabhängig von der linearen Flußrate ist. Durch die Konstruktion von Partikeln mit durchgehenden Poren sind Materialien für die sehr schnelle Chromatographie mit linearen Flußraten von größer 1000 cm/h entwickelt worden. Bisher nicht bekannt ist jedoch, daß auch die Art des gebundenen Liganden einen Einfluß auf die Eignung eines Trägermaterials für die schnelle Chromatographie hat.

Es wurden nun festgestellt, daß es eine Abhängigkeit zwischen der chemischen Struktur eines Liganden (bei einem Kationenaustauscher) und der Höhe der sogenannten dynamischen Proteinbindungskapazität (Durchbruchskapazität in Abhängigkeit vom linearen Fluß) gibt.

Zur Bestimmung der dynamischen Proteinbindungskapazität wurde das Monomer Sulfoethylacrylamid in Gegenwart von Cer(IV)-Ionen auf Fractogel gepfropft und in eine Säule gefüllt (Superformance® 50-10 mm). Als Probe wurde eine Lösung von 10 mg/ml Lysozym in Phosphatpuffer eingesetzt. Dabei zeigte sich, daß bei einer linearen Flußrate von 720 cm/h die dynamische Proteinkapazität sich nur um 25,6 % verringert hat. Bei gleicher Versuchsdurchführung, jedoch mit Sulfoisobutylacrylamid als aufgepfropftem Monomer hatte sich die dynamische Proteinkapazität um 65,5 % verringert. Das zeigt, daß überraschenderweise die Art des gebundenen Liganden einen großen Einfluß auf die Eignung eines Trägermaterials für die schnelle Chromatographie hat.

Desweiteren wurde überraschenderweise festgestellt, daß die Verwendung höherer Konzentrationen von anorganischen Salzen im Ansatz zur Pfropfpolymerisation zu einer erheblichen Steigerung der Pfropfungsausbeute führt. Das zeigt sich im Falle von aufgepfropften lonenaustauschern vom Typ der substituierten Polyacrylamide unter anderem durch eine stark erhöhte dynamische Bindungskapazität für Proteine. Aus diesem überraschenden Effekt ergibt sich eine bisher noch nicht bekannte Steuerungsmöglichkeit für die erreichbare Ligandendichte auf der inneren Oberfläche von Chromatographieträgem und anderweitig verwendeten partikulären oder membranartigen Materialien, die durch Pfropfpolymerisation auf das Basismaterial hergestellt werden. Dieser Effekt greift insbesondere bei der Verwendung hydrophiler Monomerer, die stark saure Gruppen enthalten, wie im Falle des erfindungsgemäß verwendeten Sulfoethylacrylamids.

Die Konzentration der anorganischen Salze im Polyacrylierungsansatz für die Pfropfpolymerisation sollte im Bereich von 1 bis 3,5 Mol/l liegen, vorzugsweise bei 2 bis 3 Mol/l. Dabei können alle Salze verwendet werden, die mit den zur Initiierung der Polymerisation verwendeten Startern, z.B. Cer(IV)-Ionen, keine oder nur eine geringe Wechselwirkung eingehen. Für das erfindungsgemäße Verfahren geeignete anorganische Salze sind z.B. Natriumchlorid, Natriumperchlorat, Natriumsulfat, Ammoniumsulfat usw., sowie Gemische dieser Salze.

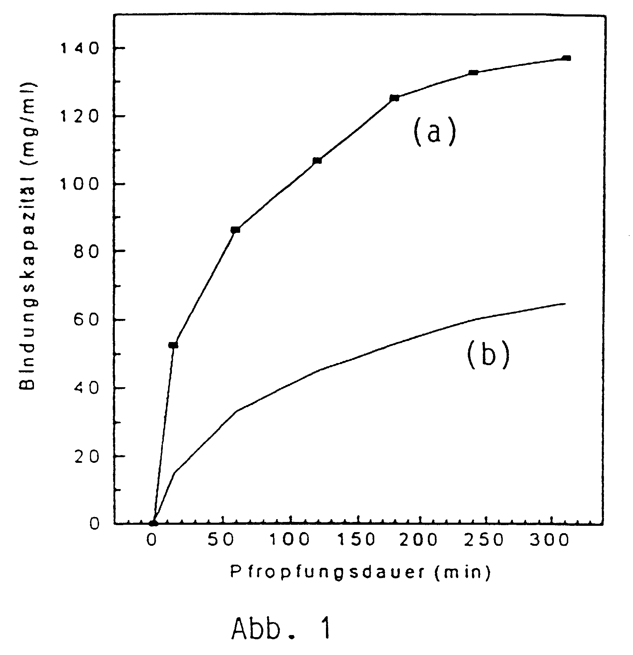

Durch Zusatz höherer Konzentrationen anorganischer Salze im Polyacrylierungsansatz (z.B. 3 Mol/l Natriumchlorid oder 1 Mol/l Natriumchlorid plus 1 Mol/l Natriumperchlorat) wird z.B. die Pfropfungsausbeute für Sulfoethylacrylamid auf Fractogel® HW 65 (S) oder Fractogel® HW 65 (M) gegenüber vergleichbaren Ansätzen mit niedrigerer Salzkonzentrationen (1 Mol/l Natriumchlorid) bis zum Dreifachen erhöht. Abb. 1 zeigt die Abhängigkeit der dynamischen Bindungskapazität von Fractogel® EMD SE-650 (S) für Lysozym von der Dauer der Polyacrylierung in Gegenwart von 3 Mol/l Natriumchlorid (Kurve a), von 1 Mol/l Natriumchlorid bzw. ohne Salzzusatz (Kurve b). Die Ansatzgröße betrug jeweils 2,5 l Gel in 12,51 Gesamtvolumen. Der Vergleich mit Ansätzen ohne Salzzusatz zeigt die deutliche Verbesserung des Ergebnisses hinsichtlich der erreichbaren Bindekapazität für Protein. Darüberhinaus wird deutlich, daß die durch Aufnahme einer derartigen "Pfropfungskinetik" ermittelten Reaktionsbedingungen auch im Falle von Chargenwechsel wichtiger Komponenten eine reproduzierbare Steuerung der Proteinbindungskapazität des Produkts zuläßt.

Die verschiedenen anorganischen Salze sind in Abhängigkeit von den durch sie in den Polymerisationsansatz eingebrachten lonenarten von unterschiedlichem Einfluß auf die Pfropfungsausbeute. Die höchsten Bindekapazitäten des Pfropfprodukts für Lysozym wurden mit 200 mg/ml Gel durch Polyacrylierung in Gegenwart von 1 Mol/l Natriumperchlorat erhalten. Hierbei war außerdem eine Konzentration von 1 Mol/l Natriumchlorid als Folge der zuvor durchgeführten Neutralisation der eingesetzten Monomerlösung im Reaktionsansatz vorhanden. Ansätze, bei denen der Zusatz von Natriumperchlorat weggelassen wurde, erreichten dagegen auch bei auf 12 Stunden verlängerter Reaktionszeit maximale Bindungskapazitäten von 65 mg/ml Gel. Steigerungen der Bindekapazität auf Werte zwischen 100 und 180 mg/ml wurden durch Zusatz von Natriumchlorid, Ammoniumsulfat und Natriumsulfat anstelle von Natriumperchlorat und in Konzentrationen von 1 bis 3,5 Mol/l erhalten.

Die Herstellung der Trennmaterialien nach der Erfindung erfolgt durch Pfropfpolymerisation mit Sulfoethylacrylamid, das seinerseits durch Umsetzung von Acrylsäurederivaten mit Aminoethansulfonsäure hergestellt sind. Als bevorzugtes Acrylsäurederivat wird Acrylsäurechlorid eingesetzt, das frisch destilliert und bei -20 °C im Dunkeln aufbewahrt etwa zwei Jahre für den erfindungsgemäßen Einsatz geeignet bleibt. Für die Umsetzung von Acrylsäurechlorid mit Aminoethansulfonsäure ist der Zusatz eines Stabilisators erforderlich. Dieser wird dem Acrylsäurechlorid unmittelbar vor der Verwendung zugesetzt und kann dann innerhalb weniger Stunden und ohne wärmer als 10 °C zu werden in die Acrylierungsreaktion eingesetzt werden. Das so stabilisierte Sulfoethylacrylamid ist als wäßrige Lösung bei Temperaturen unterhalb von 10 °C im Dunkeln mehrere Monate lang ohne feststellbare nachteilige Veränderungen haltbar.

Als wirksamer Stabilisator nach der vorliegenden Erfindung hat sich insbesondere 4-Methoxyphenol erwiesen. Der Stabilisator sollte in Konzentrationen von etwa 0,01 bis 2 mM im Pfropfungsansatz eingesetzt werden.

Die wäßrige Lösung eines nach diesem Verfahren hergestellten Sulfoethylacrylamids zeigt bei der Analyse mit HPLC keine Hinweise auf anwesende Nebenprodukte. Damit ist auch gezeigt, daß die vorausgegangene kurzzeitige Stabilisierung des Acrylsäurechlorids durch 4-Methoxyphenol als ausreichend zur Vermeidung der Oligomerisierung anzusehen ist. Überraschenderweise wirkt sich die Anwesenheit des bisher ungebräuchlichen Stabilisators während der nachfolgenden Pfropfpolymerisation nicht störend auf das Ergebnis der Polymerisation aus.

### Beispiel 1

### Acrylierung von Aminoethansulfonsäure

Eine Lösung von 50 g Aminoethansulfonsäure und 32 g Natriumhydroxid-Plätzchen in 400 ml destilliertem Wasser wird mit einem Eisbad auf 5 °C abgekühlt. In diese Lösung werden 32 ml Acrylsäurechlorid, dem kurz vorher 3,85 mg 4-Methoxyphenol zugegeben werden, innerhalb einer Stunde zugetropft, so daß die Temperatur 8 °C nicht überschreitet. Das Eisbad wird dann entfernt, mit 25%iger Salzsäure auf einen pH-Wert von 4 eingestellt und noch eine Stunde nachgerührt.

### Beispiel 2

### Polymerisation auf Fractogel®

Zu einer Suspension von 400 ml Fractogel® HW 65 S und 1200 ml destilliertem Wasser, das 292,2 g Natriumchlorid enthält, werden 810 ml der Lösung nach Beispiel 1 und die Starterlösung aus 14,5 g Ammoniumcer(lV)nitrat, gelöst in 50 ml 0,5 M Salpetersäure, hinzugeben und 5 Stunden bei Raumtemperatur gerührt. Das Reaktionsgemisch wird mit Hilfe einer Glasfritte P2 abgesaugt und anschließend mit folgenden Waschlösungen gewaschen:
je 500 ml
Schwefelsäure 0,2 M/Natriumsulfit 0,2 M,
destilliertes Wasser, zweimal,
Schwefelsäure 0,2 M,
destilliertes Wasser, zweimal,
Natronlauge 1 M,
destilliertes Wasser,
Phosphatpuffer, 0,2 M, pH 7.

Das erhaltene Gel wird in 0,02 M Phosphatpuffer (pH 7) dem 0,2 % Natriumazid zugesetzt sind, oder auch in Ethanol 20 %/150 mM Natriumchlorid gelagert.

Anstelle von 292,2 g Natriumchlorid können z.B. auch 330,35 g Ammoniumsulfat oder 351,15 g Natriumperchlorat eingesetzt werden.

### Beispiel 3

### Bestimmung der dynamischen Proteinbindungskapazität

a) Eine Superformance®-Säule 50-10 mm wird mit dem Trennmaterial aus Beispiel 2 gefüllt und 50 ml einer Probe von 10 mg/ml Lysozym in 20 mM Phosphatpuffer, pH 7, aufgebracht. Das Eluat wurde bei 280 nm gemessen mit folgendem Ergebnis:

| Lineare Flußrate [cm/h] | mg Lysozym/ml gepacktes Gel |
|---|---|
| 40 | 57,8 |
| 80 | 55,8 |
| 200 | 54,8 |
| 400 | 49,8 |
| 720 | 43,0 |

Die Tabelle zeigt, daß sich die dynamische Proteinbindungskapazität bei einer linearen Flußrate von 720 cm/h mit dem Trennmaterial nach Beispiel 2 nur um 25,6 % verringert hat.
b) Die Bestimmung wird mit einem Trennmaterial durchgeführt, das anstelle von Sulfoethylacrylamidgruppen mit Sulfoisobutylacrylamidgruppen beladen ist. Die Durchführung erfolgte analog Beispiel 3a) mit folgendem Ergebnis:

| Lineare Flußrate [cm/h] | mg Lysozym/ml gepacktes Gel |
|---|---|
| 40 | 74,8 |
| 80 | 66,9 |
| 200 | 49,4 |
| 400 | 36,6 |
| 720 | 25,8 |

Die Ergebnisse zeigen, daß bei einer linearen Flußrate von 720 cm/h die dynamische Proteinbindungskapazität nur noch einen Wert von 35 % der Ausgangskapazität hat.

## Patentansprüche

1. Trennmaterialien auf Basis von hydroxylgruppenhaltigen Trägern, deren Oberfläche mit kovalent gebundenen Polymeren beschichtet sind, wobei die Polymeren aus gleichen wiederkehrenden Einheiten der Formel I bestehen 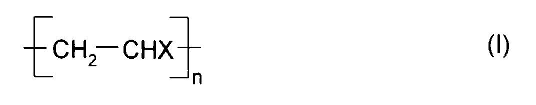 worin
X CO-NH-CH₂-CH₂-SO₃H und
n 2-100
bedeuten, hergestellt durch
Pfropfpolymerisation in Gegenwart von Cer(IV)-Ionen und von 1 bis 3,5 Mol/l anorganischer Salze im Polyacrylierungsansatz.

2. Verfahren zur Herstellung von Trennmaterialien nach Anspruch 1, dadurch gekennzeichnet, daß man das Monomere durch Umsetzung von Acrylat mit Aminoethansulfonsäure in wäßriger Lösung in Gegenwart eines Stabilisators herstellt und direkt zur Pfropfpolymerisation einsetzt.

3. Verfahren nach Anspruch 2, dadurch gekennzeichnet, daß als Stabilisator 4-Methoxyphenol eingesetzt wird.

## Claims

1. Separating materials based on supports containing hydroxyl groups, whose surfaces are coated with covalently bonded polymers, the polymers consisting of identical recurring units of the formula I 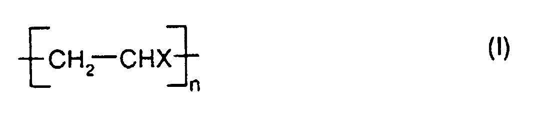 in which
X is CO-NH-CH₂-CH₂-SO₃H and
n is 2-100,
prepared by
graft polymerization in the presence of cerium(IV) ions and of 1 to 3.5 mol/l of inorganic salts in the polyacrylation mixture.

2. Process for the preparation of separating materials according to Claim 1, characterized in that the monomer is prepared by reaction of acrylate with aminoethanesulfonic acid in aqueous solution in the presence of a stabilizer and is employed directly for graft polymerization.

3. Process according to Claim 2, characterized in that the stabilizer employed is 4-methoxyphenol.

## Revendications

1. Matériaux de separation à base de supports contenant des groupes hydroxyles dont la surface est revêtue avec des polymères liés de manière covalente, les polymères étant composés d'unités répétitives identiques de la formule I 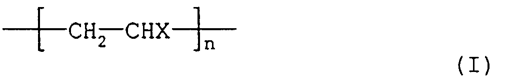 dans laquelle
X est CO-NH-CH₂-CH₂-SO₃H et
n vaut de 2 à 100,
préparés par polymérisation par greffage en présence d'ions de cérium(IV) et de 1 à 3,5 moles/l de sels inorganiques dans la charge de polyacrylation.

2. Procédé de préparation de matériaux de separation selon la revendication 1, caractérisé en ce que l'on prépare le monomère en faisant réagir de l'acrylate avec de l'acide aminoéthanesulfonique dans une solution aqueuse en présence d'un stabilisateur, et en ce qu'on l'utilise directement pour la polymérisation par greffage.

3. Procédé selon la revendication 2, caractérisé en ce que l'on utilise comme stabilisant le 4-méthoxyphénol.
